# EUROPEAN PATENT APPLICATION

(11) **EP 4 299 289 A1**
(43) Date of publication of application: **03.01.2024**
(21) Application number: 21927902.3
(22) Date of filing: 26.02.2021
(51) Int. Cl.: B29C 64/386

(54) **METHOD FOR DETECTING MANUFACTURING DEFECTS, 3D ADDITIVE MANUFACTURING SYSTEM, INFORMATION PROCESSING DEVICE, INFORMATION PROCESSING METHOD, AND INFORMATION PROCESSING PROGRAM**

(71) Applicant: Technology Research Association For Future Additive Manufacturing, Tokyo, 101-0044 (JP)
(72) Inventor: AOYAGI, Kenta, Sendai-shi, Miyagi 980-8577 (JP); CHIBA, Akihiko, Sendai-shi, Miyagi 980-8577 (JP)
(74) Representative: Betten & Resch
(86) International application number: PCT/JP2021/007420
(87) International publication number: WO 2022/180802

(57) **Abstract**

An information processing apparatus for controlling additive manufacturing of a powder bed method includes an acquirer that acquires roughness data indicating a roughness of a manufacturing surface after melting, and defect determiner that divides the manufacturing surface into small regions each having a predetermined size, and compares the roughness data with a predetermined threshold for each small region, thereby determining whether a defect exists in the small region. If an unmolten region is included in the small region, the defect determiner replaces data of the manufacturing surface in the unmolten region using data of the manufacturing surface in the small region, and determines whether a defect exists in the small region including the unmolten region. Also, the manufacturing defect detection method further includes a defect repair instructor that instructs remelting of a region that is determined by the defect determiner to have a defect.

## Description

### TECHNICAL FIELD

The present invention relates to a manufacturing defect detection method, a three-dimensional additive manufacturing system, an information processing apparatus, an information processing method, and an information processing program.

### BACKGROUND ART

In the above technical field, patent literature 1 discloses a technique of capturing the entire surface of an additive manufacturing part before and after melting and determining a manufacturing abnormality. Also, patent literature 2 discloses a technique of generating a process window based on defect determination by image capturing of a manufacturing material with a small size. Furthermore, non-patent literatures 1 to 4 each disclose a technique of detecting a defect from the state of a molten pool or an observation image of an entire manufacturing surface.

### CITATION LIST

### PATENT LITERATURE

Patent literature 1: Japanese Patent Laid-Open No. 2019-142101
Patent literature 2: WO 2020/039581

### NON-PATENT LITERATURE

Non-patent literature 1: L. Scime, J. Beuth, "Using machine learning to identify in-situ melt pool signatures indicative of flaw formation in a laser powder bed fusion additive manufacturing process", Additive Manufacturing, 25 (2019), 151-165.
Non-patent literature 2: L. Scime, J. Beuth, "Anomaly detection and classification in a laser powder bed additive manufacturing process using a trained computer vision algorithm", Additive Manufacturing, 19 (2018), 114-126.
Non-patent literature 3: C.R. Pobel, C. Arnold, F. Osmanlic, Z. Fu, C. Korner, "Immediate development of processing windows for selective electron beam melting using layerwise monitoring via backscattered electron detection", Materials Letters, 249 (2019) 70-72.
Non-patent literature 4: M. Adnan, Y. Lu, A. Jones, F.T. Cheng, H. Yeung, "A New Architectural Approach to Monitoring and Controlling AM Processes", Applied Science, 10 (2020) 6616.

### SUMMARY OF THE INVENTION

### TECHNICAL PROBLEM

However, in the techniques described in the above literatures, since a defect is detected from the state of a molten pool or an observation image of an entire manufacturing surface, it is impossible to determine a defect position during additive manufacturing and efficiently repair it.

The present invention enables to provide a technique of solving the above-described problem.

### SOLUTION TO PROBLEM

One example aspect of the invention provides
an information processing apparatus for controlling additive manufacturing of a powder bed method, comprising:
   an acquirer that acquires roughness data indicating a roughness of a manufacturing surface after melting; and
   a defect determiner that divides the manufacturing surface into small regions each having a predetermined size, and compares the roughness data with a predetermined threshold for each small region, thereby determining whether a defect exists in the small region.

Another example aspect of the invention provides
an information processing method for controlling additive manufacturing of a powder bed method, comprising:
measuring a roughness of a manufacturing surface after melting; and
dividing a region of the manufacturing surface into small regions each having a predetermined size, and comparing the roughness with a predetermined threshold for each small region, thereby determining whether a defect exists in the small region.

Still other example aspect of the invention provides
an information processing program for controlling additive manufacturing of a powder bed method, which causes a computer to execute a method, comprising:
measuring a roughness of a manufacturing surface after melting; and
dividing a region of the manufacturing surface into small regions each having a predetermined size, and comparing the roughness with a predetermined threshold for each small region, thereby determining whether a defect exists in the small region.

Still other example aspect of the invention provides
a manufacturing defect detection method comprising:
acquiring a surface image obtained by capturing a manufacturing surface of each layer after melting in additive manufacturing of a powder bed method;
extracting a molten region from the surface image;
dividing the molten region into small regions each having a predetermined size; and
determining, based on a roughness of the surface image of the small region, whether a defect exists for each small region.

### ADVANTAGEOUS EFFECTS OF INVENTION

According to the present invention, since a defect position can be determined during additive manufacturing, it can efficiently be repaired.

### BRIEF DESCRIPTION OF DRAWINGS

Fig. 1 is a block diagram showing the configuration of an information processing apparatus according to the first example embodiment;
Fig. 2A is a view showing the processing procedure of defect detection by an information processing apparatus according to the second example embodiment;
Fig. 2B is a view showing the processing procedure of defect detection by the information processing apparatus according to the second example embodiment;
Fig. 2C is a view showing the processing procedure of defect detection and defect repair by the information processing apparatus according to the second example embodiment;
Fig. 2D is a view for explaining defect detection by the information processing apparatus according to the second example embodiment;
Fig. 3 is a flowchart showing the processing procedure of defect detection according to the second example embodiment;
Fig. 4A is a block diagram showing the configuration of a three-dimensional additive manufacturing system including the information processing apparatus according to the second example embodiment;
Fig. 4B is a view showing the configuration of an additive manufacturing unit according to the second example embodiment;
Fig. 5 is a block diagram showing the functional configuration of the information processing apparatus according to the second example embodiment;
Fig. 6A is a block diagram showing the functional configuration of a defect determiner according to the second example embodiment;
Fig. 6B is a view showing the configuration of data used by the defect determiner according to the second example embodiment;
Fig. 6C is a view showing the configuration of a table used by the defect determiner according to the second example embodiment to detect a defect;
Fig. 7A is a block diagram showing the functional configuration of a defect repairer according to the second example embodiment;
Fig. 7B is a view showing the configuration of a table used by the defect repairer according to the second example embodiment to repair a defect;
Fig. 8 is a block diagram showing the hardware configuration of the information processing apparatus according to the second example embodiment;
Fig. 9 is a flowchart showing the processing procedure of the information processing apparatus according to the second example embodiment;
Fig. 10 is a block diagram showing the functional configuration of a defect repairer according to the third example embodiment;
Fig. 11 is a block diagram showing the functional configuration of an information processing apparatus according to the fourth example embodiment;
Fig. 12 is a block diagram showing a functional configuration of a defect repairer according to the fourth example embodiment; and
Fig. 13 is a block diagram showing another functional configuration of the defect repairer according to the fourth example embodiment.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

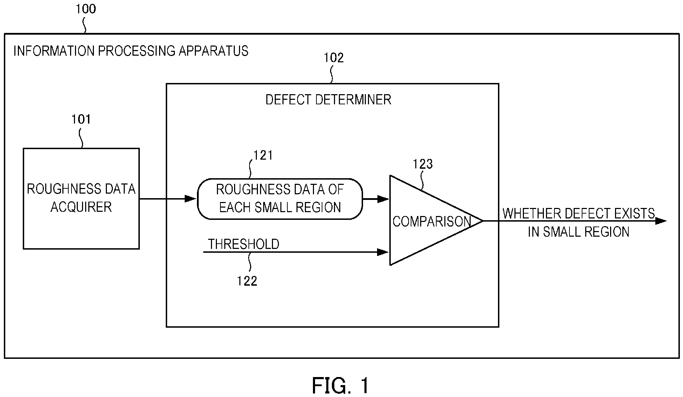

An information processing apparatus 100 according to the first example embodiment of the present invention will be described with reference to Fig. 1. The information processing apparatus 100 is an apparatus configured to control additive manufacturing of a powder bed method.

As shown in Fig. 1, the information processing apparatus 100 includes an acquirer 101 and a defect determiner 102. The acquirer 101 acquires roughness data representing the roughness of a manufacturing surface after melting. The defect determiner 102 divides the manufacturing surface into small regions each having a predetermined size, and compares roughness data 121 with a predetermined threshold 122 (123), thereby determining whether a defect exists in a small region.

According to this example embodiment, the manufacturing surface is divided into small regions each having a predetermined size, and it is determined, for each small region, whether a defect exists. Hence, since a defect position can be determined during additive manufacturing, it can efficiently be repaired.

### [Second Example Embodiment]

A three-dimensional additive manufacturing system including an information processing apparatus according to the second example embodiment of the present invention will be described next. The information processing apparatus according to this example embodiment captures a surface image of each layer after melting, and detects a manufacturing defect after melting from the surface image. As for the detection of the manufacturing defect, after a molten region is extracted from the surface image, the molten region is divided into a predetermined size to generate small regions, and a manufacturing defect is determined based on roughness data for each small region. In this case, in a small region at the boundary portion of the molten region, the roughness data of a non-molten region is replaced with (complemented by) the roughness data of the molten region, thereby determining a manufacturing defect. Note that in the determination of the manufacturing defect, not only the roughness of the surface of each layer but also a defect embedded immediately under the surface of each layer can be detected.

A small region in which a defect is detected is repaired by remelting using a predetermined irradiation energy (an output and/or a scan speed or a beam diameter). Note that if the number of times of remelting exceeds an upper limit threshold of a predetermined number of times, manufacturing is stopped.

### <Processing Procedure of Defect Detection>

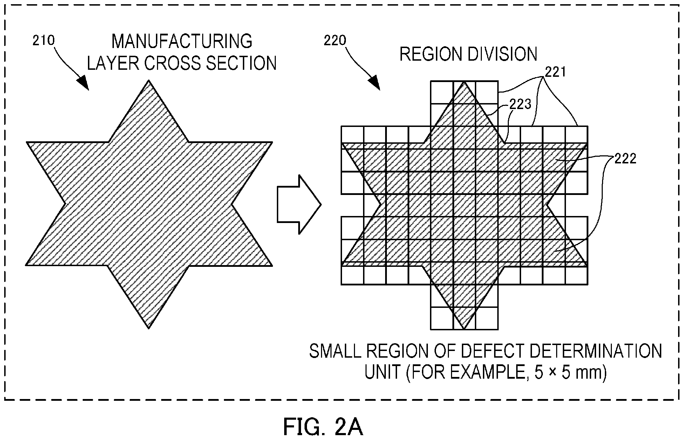

The processing procedure of defect detection by the information processing apparatus according to this example embodiment will be described below with reference to Fig. 2A to 3.

Fig. 2A is a view showing region division of a molten region (manufacturing layer cross section) in defect detection according to this example embodiment. For example, after melting of one layer, a manufacturing layer cross section 210 is cut out from a captured manufacturing surface image. The manufacturing layer cross section 210 can easily be cut out by finding the boundary of the manufacturing layer cross section 210 based on the contrast difference in the manufacturing surface image. For example, a molten region is flatter than a non-molten region, and contrast caused by powder particles in the non-molten region does not appear.

Next, a region including the manufacturing layer cross section 210 is divided into small regions 221 (for example, 5 mm × 5 mm) of a defect discrimination unit (220). The small regions 221 include non-boundary regions 222 in which the entire region is the molten region of the manufacturing layer cross section 210, and boundary regions 223 in which a partial region is the molten region of the manufacturing layer cross section 210.

Note that each small region of the defect discrimination unit has a size necessary for discriminating a defect embedded immediately under the surface. For example, in this example embodiment, a rectangular region having a size of 5 mm × 5 mm, which is a region having a size 5 to 10 times the width of a molten pool, is used as the small region. Note that if the size of the small region is too small, a feature amount affected by an embedded defect cannot be obtained, and a defect exposed to the surface is emphasized.

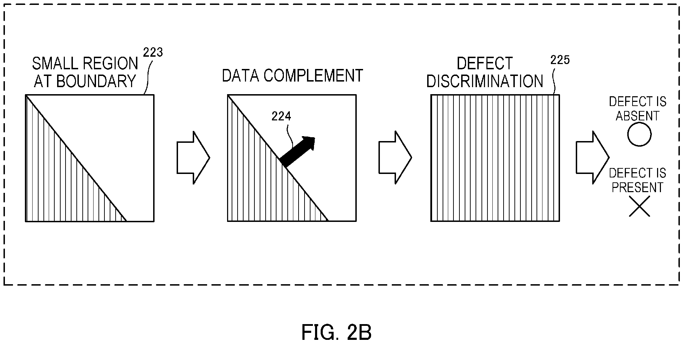

Fig. 2B is a view showing handling of the boundary region 223 in the defect detection according to this example embodiment. The boundary region 223 includes a molten region and a non-molten region. In this case, powder particles in the non-molten region have roughness and are erroneously determined as a melting defect at high possibility. Hence, the roughness data of the non-molten region is replaced with the roughness data of the molten region. Then, a defect is determined based on the roughness data of a complementary region 225.

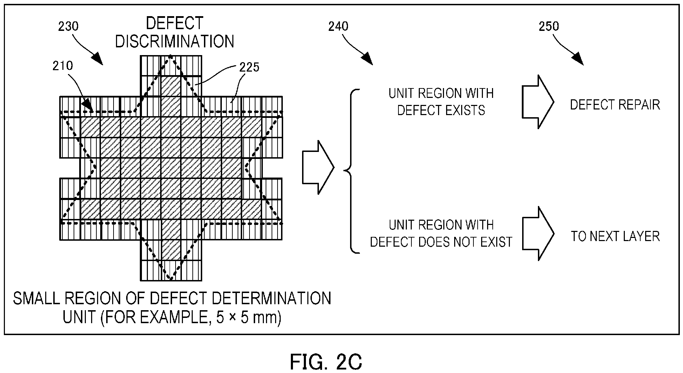

Fig. 2C is a view showing the processing procedure of defect detection and defect repair according to this example embodiment. By complementing the boundary small region shown in Fig. 2B, defect determination data 230 of the region including the manufacturing layer cross section 210 can be obtained. Then, for each small region, it is determined whether a defect exists (240). If at least one small region with a defect exists, processing of defect repair including remelting is performed for the small region. If there is no small region with a defect, the process advances to additive manufacturing of a next layer. Note that in general, since the roughness data of the molten region is an average value of unevenness, or the like, the boundary region 223 for which data is complemented by replacement is often determined to have no defect. However, this rarely affects defect determination of the manufactured molten region.

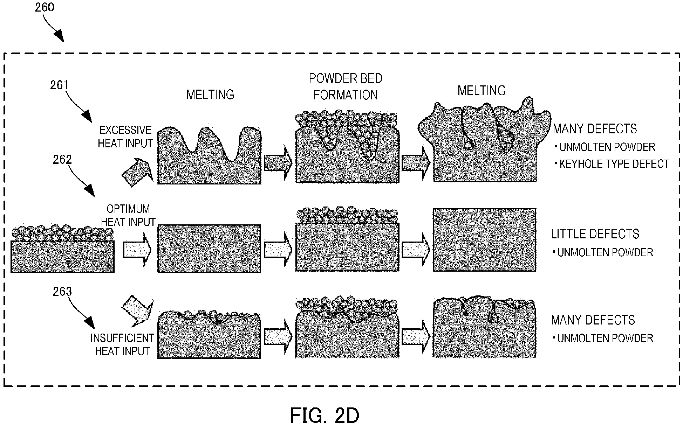

Fig. 2D is a view for explaining the defect detection according to this example embodiment. In an excessive heat input (High energy) 261 shown in Fig. 2D, a powder layer is molten deep, and unevenness is formed on the surface. Next powder enters the concave portions. As a result, unmolten powder remains in the product, no fine shape can be obtained, and unevenness is formed on the surface. In a laser melting method, a keyhole type defect with a bubble remaining is formed. In an insufficient heat input (Low energy) 263 shown in Fig. 2D, unmolten powder remains on the surface of the powder layer. Next powder is stacked on it, and as a result, melting is insufficient, and unevenness is formed on the surface. An optimum heat input (Optimum energy) 262 is between the sample shape of the excessive heat input (High energy) and the sample shape of the insufficient heat input (Low energy). A fine shape can be formed, and the surface is flat. In this example embodiment, defect repair (remelting) is repeated such that a suitable evaluation result can be obtained.

### (Processing Procedure of Defect Detection)

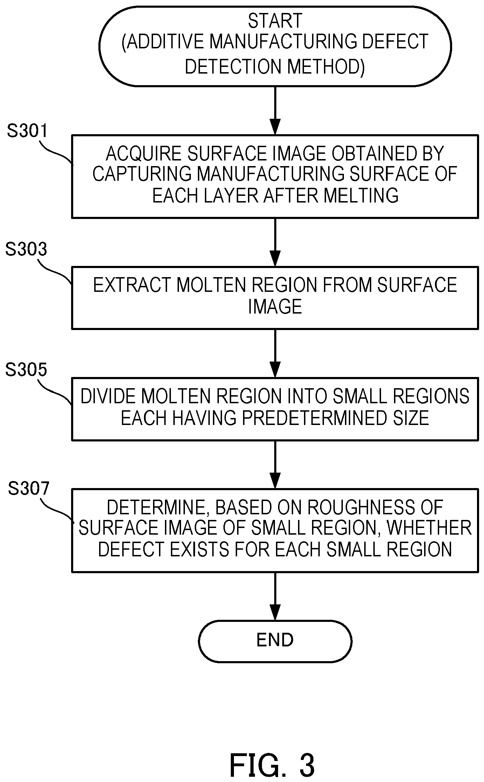

Fig. 3 is a flowchart showing the processing procedure of the defect detection according to this example embodiment. In step S301, a surface image is acquired by capturing the manufacturing surface of each layer after melting. In step S303, a molten region is extracted from the surface image. In step S305, the molten region is divided into small regions each having a predetermined size. In step S307, it is determined, based on the roughness of the surface image of each small region, whether the small region includes a defect.

### <Three-Dimensional Additive Manufacturing System>

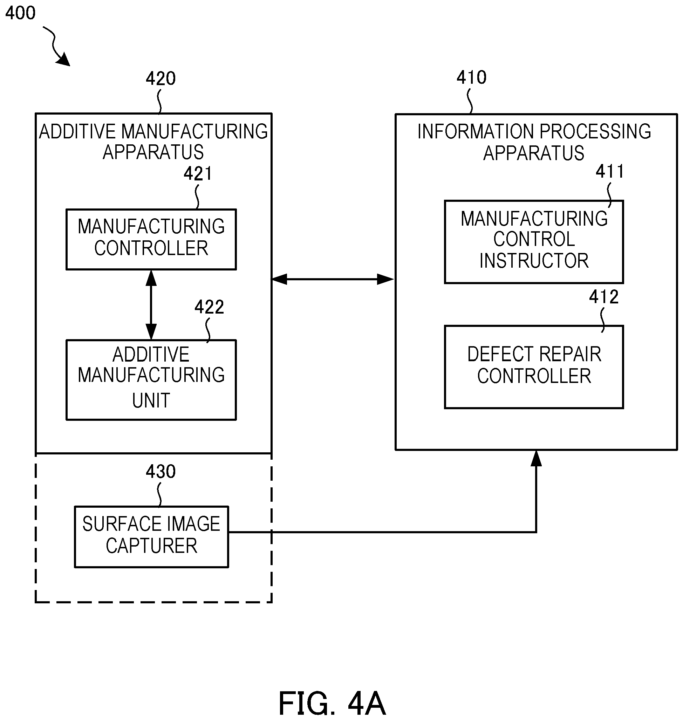

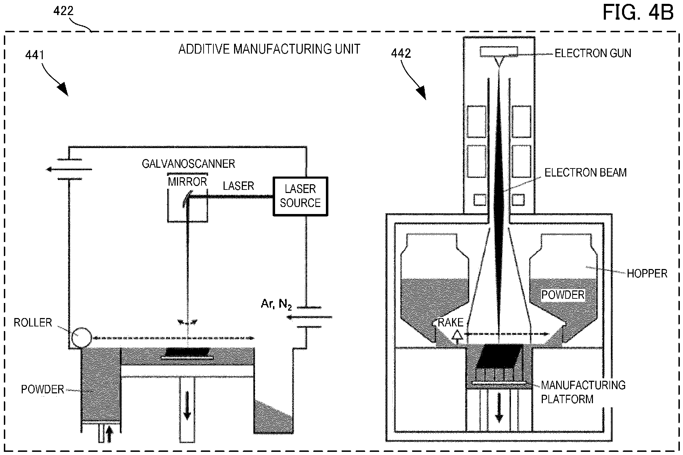

The configuration of a three-dimensional additive manufacturing system including the information processing apparatus according to this example embodiment will be described with reference to Figs. 4A and 4B.

### (System Configuration)

Fig. 4A is a block diagram showing the configuration of a three-dimensional additive manufacturing system 400 including an information processing apparatus 410 according to this example embodiment.

The three-dimensional additive manufacturing system 400 includes the information processing apparatus 410 according to this example embodiment, an additive manufacturing apparatus 420, and a surface image capturer 430. Note that the surface image capturer 430 may be incorporated in the additive manufacturing apparatus 420 or separately installed.

The information processing apparatus 410 includes a manufacturing control instructor 411 that instructs manufacturing of an additively manufactured object by an additive manufacturing unit 422, and a defect repair controller 412 that controls defect repair if it is determined after melting that a defect exists.

The additive manufacturing apparatus 420 includes a manufacturing controller 421 that controls the additive manufacturing unit 422 to manufacture an additively manufactured object in accordance with an instruction from the information processing apparatus 410, and the additive manufacturing unit 422 that manufactures an additively manufactured object in accordance with control of the manufacturing controller 421.

The surface image capturer 430 captures the surface after melting of each layer of the additively manufactured object. Note that the surface image capturer 430 may be an X-ray camera capable of capturing an internal structure without processing such as cutting of the additively manufactured object.

### (Additive Manufacturing Unit)

Fig. 4B is a view showing the configuration of the additive manufacturing unit 422 according to this example embodiment.

An additive manufacturing unit 441 shown in Fig. 4B is an additive manufacturing unit of a powder bed method using a laser melting method, and this method is called SLM (Selective Laser Melting). On the other hand, an additive manufacturing unit 442 shown in Fig. 4B is an additive manufacturing unit of a powder bed method using an electron beam melting method, and the method is called EBM (Electron Beam Melting). In this example embodiment, electron beam melting (EBM) will be described as an example. However, the system can be applied to selective laser melting (SLM), and the same effect can be obtained. Note that the configurations of the additive manufacturing units 441 and 442 shown in Fig. 4B are merely examples, and are not limited to these. For example, powder supply of the additive manufacturing unit 442 may be configured like the additive manufacturing unit 441.

### <Functional Configuration of Information Processing Apparatus>

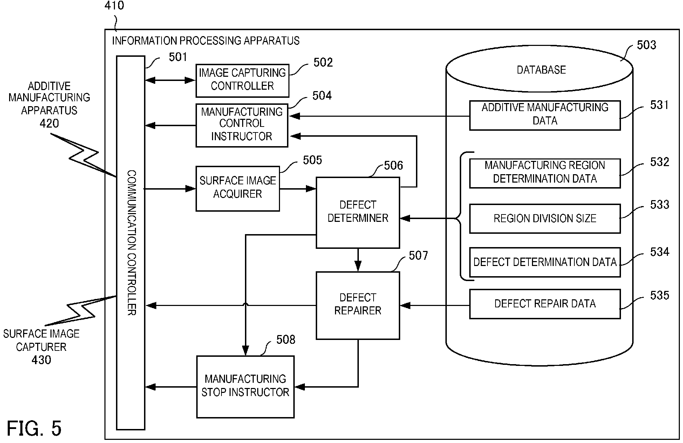

Fig. 5 is a block diagram showing the functional configuration of the information processing apparatus 410 according to this example embodiment.

The information processing apparatus 410 includes a communication controller 501, an image capturing controller 502, a database 503, and a manufacturing control instructor 504. Also, the information processing apparatus 410 includes a surface image acquirer 505, a defect determiner 506, a defect repairer 507, and a manufacturing stop instructor 508.

The communication controller 501 controls communication with the additive manufacturing apparatus 420 and the surface image capturer 430. Note that the additive manufacturing apparatus 420 and the surface image capturer 430 may be connected using a bus or a cable via an input/output interface. The image capturing controller 502 controls image capturing of the manufacturing surface after melting by the surface image capturer 430. The database 503 stores data and parameters to be used by the information processing apparatus 410. The database 503 stores additive manufacturing data 531 to be used by the manufacturing control instructor 504 for additive manufacturing. Also, the database 503 stores manufacturing region determination data 532 to be used by the defect determiner 506 to determine a defect, a region division size 533, and defect determination data 534. The database 503 also stores defect repair data 535 to be used by the defect repairer 507 for defect repair. Note that the database 503 may store a surface image, although not illustrated.

Using the additive manufacturing data 531, the manufacturing control instructor 504 instructs the additive manufacturing apparatus 420 to manufacture an additively manufactured object corresponding to the additive manufacturing data 531. Note that the manufacturing control instructor 504 monitors and checks the operation state of the additive manufacturing apparatus 420, although not illustrated. Upon receiving a defect absence notification from the defect determiner 506, additive manufacturing of the next layer is started. The surface image acquirer 505 acquires the image of a layer surface captured every time melting each layer or melting every predetermined number of layers. The defect determiner 506 determines the presence/absence of a defect for each small region obtained by region division from the image of the layer surface after melting using the manufacturing region determination data 532, the region division size 533, and the defect determination data 534. The defect determiner 506 notifies the defect repairer 507 of a small region with a defect. If no defect is found, or a defect is repaired, the defect determiner 506 causes the manufacturing control instructor 504 to start manufacturing of the next layer. Upon determining that there is a defect that cannot be repaired, the defect determiner 506 makes a notification to the manufacturing stop instructor 508.

In accordance with a defect presence notification from the defect determiner 506, the defect repairer 507 instructs the manufacturing control instructor 504 to do defect repair using the defect repair data 535. Upon determining that the defect cannot be repaired even by defect repair, the defect repairer 507 causes the manufacturing stop instructor 508 to issue an instruction to stop manufacturing. The manufacturing stop instructor 508 instructs the additive manufacturing apparatus 420 to stop manufacturing in accordance with a notification of an unrepairable defect that is received from the defect determiner 506 or a notification representing that repair is impossible, which is received from the defect repairer 507.

### (Defect Determiner)

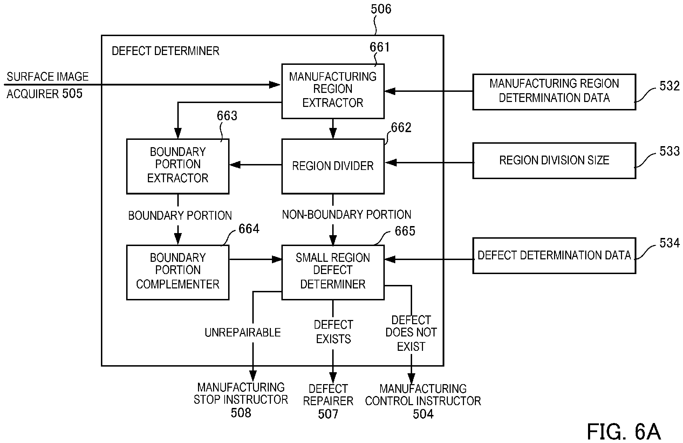

Fig. 6A is a block diagram showing the functional configuration of the defect determiner 506 according to this example embodiment.

The defect determiner 506 includes a manufacturing region extractor 661, a region divider 662, a boundary portion extractor 663, a boundary portion complementer 664, and a small region defect determiner 665.

The manufacturing region extractor 661 extracts a manufacturing region (molten region) from a surface image obtained from the surface image acquirer 505 using the manufacturing region determination data 532. The region divider 662 divides a region including the manufacturing region (molten region) into small regions using the region division size 533. The boundary portion extractor 663 extracts, from the small regions divided by the region divider 662, a small region of a boundary portion including the boundary of the manufacturing region (molten region) extracted by the manufacturing region extractor 661. The boundary portion complementer 664 performs complement as shown in Fig. 2B for the small region of the boundary portion.

The small region defect determiner 665 determines, based on surface roughness, whether each of small regions of non-boundary portions and complemented small regions of boundary portions has a defect. If a defect is an unrepairable defect, the manufacturing stop instructor 508 is notified of it. Upon determining that a repairable defect exists, the defect repairer 507 is instructed to do defect repair. Upon determining that there is no defect, the manufacturing control instructor 504 is caused to start manufacturing of the next layer.

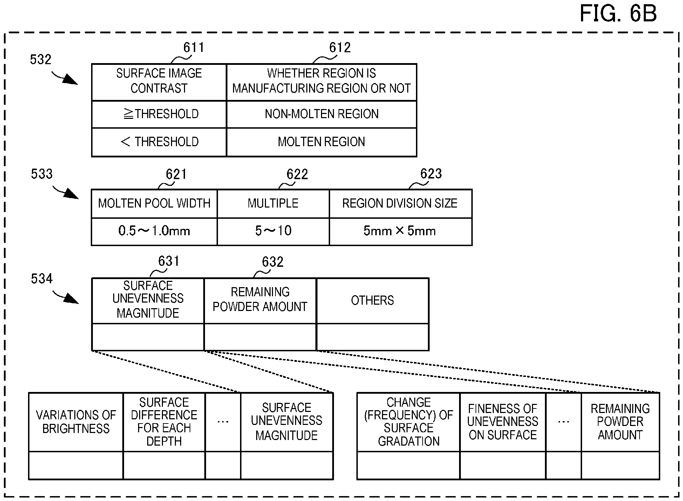

Fig. 6B is a view showing the configuration of data used by the defect determiner 506 according to this example embodiment.

The manufacturing region determination data 532 is data to be used to determine whether a region is a manufacturing region (molten region) or not 612 based on the image acquired by the manufacturing region extractor 661. In the manufacturing region determination data 532, for example, if contrast 611 of the surface image is equal to or larger than a threshold, the region is determined as a non-molten region. If the contrast 611 is smaller than the threshold, the region is determined as a molten region. Note that the determining whether a region is a manufacturing region (molten region) or not is not limited to this.

The region division size 533 is the size of a small region used by the region divider 662 to divide the manufacturing region into small regions. As for the region division size 533, in this example embodiment, if a molten pool width 621 is 0.5 mm to 1.0 mm, a region division size 623 is set to 5 mm × 5 mm by defining a multiple 622 of the molten pool to 5 to 10 as the size with which the unevenness of the molten pool width does not affect the surface roughness. However, the numerical values are not limited to these. In particular, a size with which the unevenness of the molten pool width does not affect the surface roughness is selected.

The defect determination data 534 is data used by the small region defect determiner 665 to determine whether a defect exists in a small region. As the defect determination data 534, for example, a surface unevenness magnitude 631 or a remaining powder amount 632 is used directly. Here, the surface unevenness magnitude 631 is evaluated based on the variation of brightness or the surface difference for each depth, and the remaining powder amount 632 is evaluated based on the change (frequency) of surface gradation, or the fineness of unevenness on the surface.

Note that in the small region, feature amounts such as surface property data, temperature data, sputter amount data, and molten pool data may be analyzed, and the presence/absence of a defect may be evaluated.

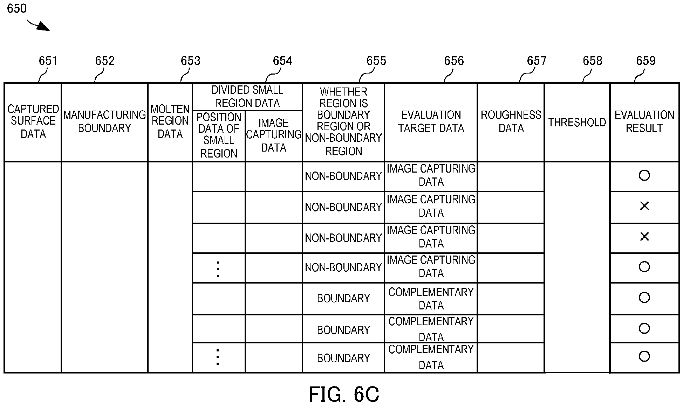

Fig. 6C is a view showing the configuration of a defect determination table 650 used by the defect determiner 506 according to this example embodiment to detect a defect.

The defect determination table 650 stores captured surface data 651 transferred from the surface image acquirer 505, a manufacturing boundary 652 extracted by the manufacturing region extractor 661, and molten region data 653. The defect determination table 650 also stores small region data 654 divided into small regions by the region divider 662. The small region data 654 includes the position data of a small region on the manufacturing surface, and the image capturing data of the small region. Also, the defect determination table 650 stores data 655 representing whether a small region is a boundary small region extracted by the boundary portion extractor 663 or another non-boundary small region, image capturing data that is evaluation target data 656 of a non-boundary small region, and complementary data that is the evaluation target data 656 of a boundary small region. The defect determination table 650 also stores roughness data 657 derived from the image capturing data of the non-boundary small region, and the roughness data 657 derived from the complementary data of the boundary region. Finally, the defect determination table 650 stores an evaluation result 659 based on a defect determination threshold 658. If the roughness data 657 is equal to or more than the threshold 658, it is determined that a defect exists in the small region. If the roughness data 657 is less than the threshold 658, it is determined that no defect exists in the small region.

Note that a simple method has been described as the defect determination, but machine learning (deep learning, CNN, support vector machine, random forest, Naive Bayes, or the like) may be used (see patent literature 2).

### (Defect Repairer)

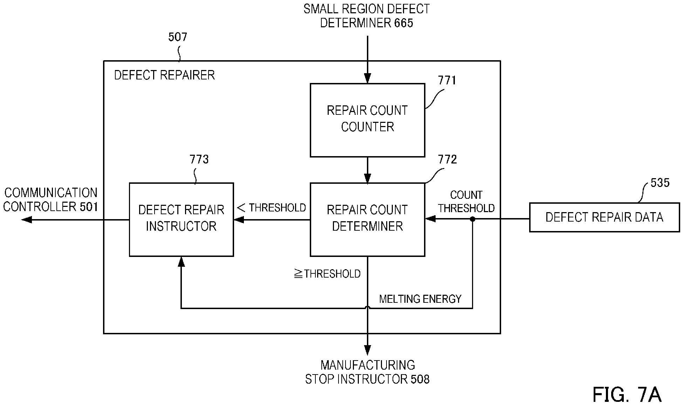

Fig. 7A is a block diagram showing the functional configuration of the defect repairer 507 according to this example embodiment.

The defect repairer 507 includes a repair count counter 771, a repair count determiner 772, and a defect repair instructor 773. The repair count counter 771 is a counter that counts the number of times of remelting that is repair. The repair count determiner 772 compares a count threshold included in the defect repair data 535 with the repair count counted by the repair count counter 771, and if the repair count is equal to or larger than the threshold, notifies the manufacturing stop instructor 508 that repair is impossible. On the other hand, if the repair count is smaller than the threshold, the repair count determiner 772 requests the defect repair instructor 773 to output an instruction to the additive manufacturing apparatus 420. In accordance with the request from the repair count determiner 772, the defect repair instructor 773 instructs remelting using a melting energy included in the defect repair data 535. Note that the defect repair data 535 may include one melting energy, or one of a plurality of melting energies may be selected. Also, the melting energy is set by at least one selected from a group of a laser output, a scan speed, and a beam diameter.

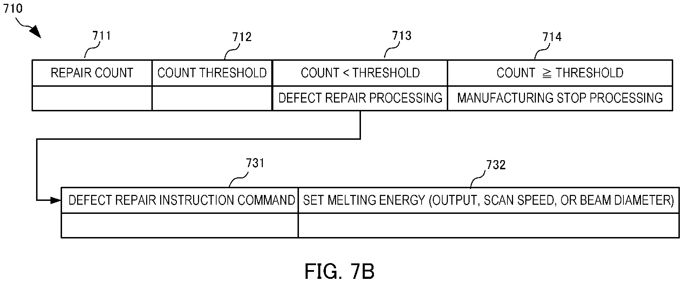

Fig. 7B is a view showing the configuration of a defect repair table 710 used by the defect repairer 507 according to this example embodiment to repair a defect.

The defect repair table 710 stores a repair count 711 counted by the repair count counter 771, a count threshold 712 from the defect repair data 535, defect repair processing corresponding to a case 713 where repair count < count threshold, and manufacturing stop processing corresponding to a case 714 where repair count ≥ count threshold. In association with the defect repair processing, a defect repair instruction command 731 from the defect repair data 535 and a set melting energy (an output, a scan speed, or a beam diameter) 732, which are sent to the additive manufacturing apparatus 420, are stored.

### <Hardware Configuration of Information Processing Apparatus>

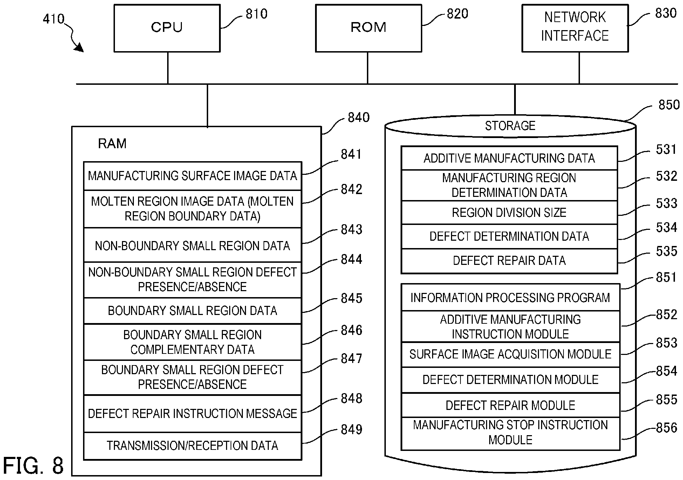

Fig. 8 is a block diagram showing the hardware configuration of the information processing apparatus 410 according to this example embodiment.

In Fig. 8, a CPU (Central Processing Unit) 810 is an arithmetic control processor and executes a program, thereby implementing the constituent elements shown in Figs. 5, 6A, and 7A. The single CPU 810 may be included, or a plurality of CPUs 810 may be provided. A ROM (Read Only Memory) 820 stores permanent data such as initial data and a program, and other programs. A network interface 830 controls communication with the manufacturing controller 421 and the surface image capturer 430 via a network.

ARAM (Random Access Memory) 840 is a random access memory to be used by the CPU 810 as a work area for temporary storage. In the RAM 840, an area for storing data necessary for implementing this example embodiment is ensured. Manufacturing surface image data 841 is image data acquired by the surface image acquirer 505. Molten region image data (molten region boundary data) 842 is data extracted by the manufacturing region extractor 661. Non-boundary small region data 843 is the data of a small region located at a non-boundary among divided small regions. Non-boundary small region defect presence/absence 844 is data indicating the presence/absence of a defect in a small region located at a non-boundary. Boundary small region data 845 is the data of a small region located at a boundary among divided small regions. Boundary small region complementary data 846 is data obtained by replacing a non-molten region with the data of a molten region. Boundary small region defect presence/absence 847 is data indicating the presence/absence of a defect based on the complementary data of a small region located at a boundary. A defect repair instruction message 848 indicates the defect repair instruction command 731 and the set melting energy 732 shown in Fig. 7B. Transmission/reception data 849 is data transmitted/received to/from the additive manufacturing apparatus 420 or the surface image capturer 430 via a network interface 830.

A storage 850 stores databases or various kinds of parameters to be used by the CPU 810 and following data and programs necessary for implementing this example embodiment. The storage 850 stores, as databases, the additive manufacturing data 531, the manufacturing region determination data 532, the region division size 533, the defect determination data 534, and the defect repair data 535.

The storage 850 stores following programs. An information processing program 851 is a program that controls the entire information processing apparatus 410. An additive manufacturing instruction module 852 is a module that controls an additive manufacturing instruction to the additive manufacturing apparatus 420. A surface image acquisition module 853 is a module that acquires the image of a manufacturing surface from the surface image capturer 430. A defect determination module 854 is a module that extracts a molten region from the image of the manufacturing surface, performs region division, complements a boundary portion, and determines a defect in each small region. A defect repair module 855 is a module that repairs a defect by remelting if a defect exists. A manufacturing stop instruction module 856 is a module that stops manufacturing if the defect determination module 854 detects an unrepairable defect or if a defect is not repaired even by defect repair of the defect repair module 855.

Note that if a display unit or an operation unit is connected as an input/output device to the information processing apparatus 410, or if the surface image capturer 430 is connected as an input device, an input/output interface may be provided.

Note that programs and data associated with general-purpose functions provided in the information processing apparatus 410 or other implementable functions are not shown in the RAM 840 or the storage 850 in Fig. 8.

### <Processing Procedure of Information Processing Apparatus>

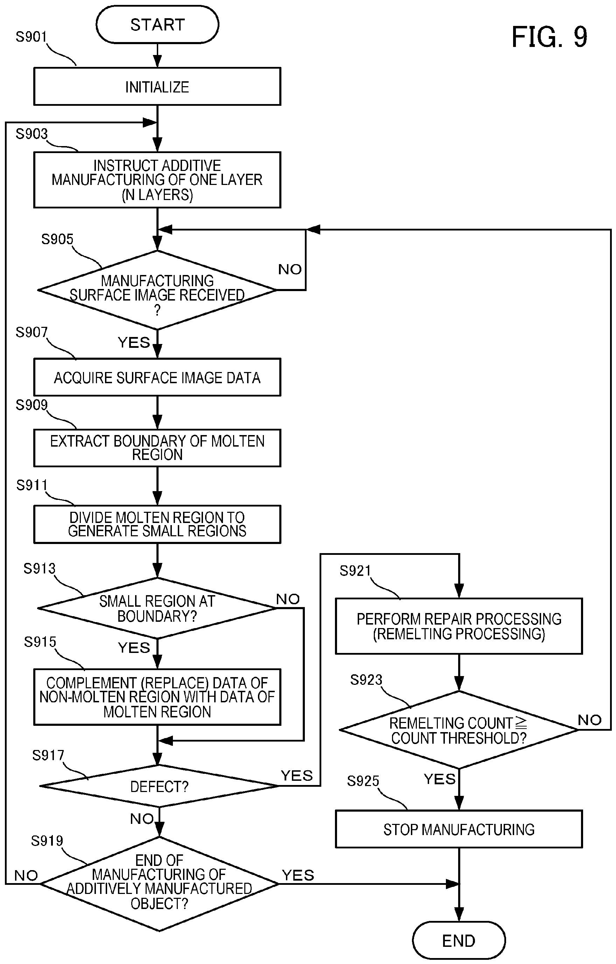

Fig. 9 is a flowchart showing the processing procedure of the information processing apparatus 410 according to this example embodiment. This flowchart is executed by the CPU 810 shown in Fig. 8 using the RAM 840 and implements the constituent elements shown in Figs. 5, 6A, and 7A.

In step S901, the information processing apparatus 410 initializes the apparatuses and the system. In step S903, the information processing apparatus 410 instructs additive manufacturing of one layer (n layers). Here, in a case of n layers, defect determination and repair are performed for every n layers.

In step S905, the information processing apparatus 410 waits for reception of a manufacturing surface image from the surface image capturer 430. If a manufacturing surface image is received, in step S907, the information processing apparatus 410 acquires surface image data. In step S909, the information processing apparatus 410 extracts the boundary between a molten region and a non-molten region based on the surface image data. In step S911, the information processing apparatus 410 divides the molten region, thereby generating small regions.

In step S913, the information processing apparatus 410 determines whether a small region is located at the boundary between the molten region and the non-molten region. If a small region is located at the boundary between the molten region and the non-molten region, in step S915, the information processing apparatus 410 complements (replaces) the data of the non-molten region with the data of the molten region. In step S917, the information processing apparatus 410 determines whether a defect exists in each of the small regions of the molten region and the complemented small regions of the non-molten region. If there is no defect, and it is determined in step S919 not to end manufacturing, the information processing apparatus 410 returns to step S903 to perform additive manufacturing of the next layer (n layers).

If a defect exists, in step S921, the information processing apparatus 410 performs remelting as repair processing for the small region with the defect. Note that if manufacturing quality is allowed to be relatively low, not repair on a small region basis but remelting for the entire molten region or a predetermined region including the defective small region may be performed. In step S923, the information processing apparatus 410 compares the remelting count with the count threshold, and if the remelting count is less than the count threshold, returns to step S905 to repeat remelting. On the other hand, if the remelting count is equal to or more than the count threshold, in step S925, the information processing apparatus 410 stops manufacturing. Note that although a case where an unrepairable defect occurs in step S917 is not illustrated in Fig. 9, in that case, the information processing apparatus 410 stops manufacturing in step S925.

According to this example embodiment, since the manufacturing surface is divided into small regions each having a predetermined size, and it is determined for each small region whether a defect exists, a defect position can be determined during additive manufacturing, and therefore, efficient repair can be performed. In addition, since a cross section of each layer is divided into small regions for defect determination, the method can be applied even to an additively manufactured object having an arbitrary shape. The repair count by remelting is limited, and manufacturing is stopped if repair is impossible. This can prevent wasteful additive manufacturing.

Furthermore, for a manufacturing material of an arbitrary shape, a manufacturing defect embedded under the manufacturing surface is repaired, and an accidental manufacturing defect is eliminated, thereby improving the quality and yield of an additive manufacturing material. For example, even if manufacturing conditions are optimized, a manufacturing defect may be formed accidentally due to the influence of stability of operation conditions of the apparatus or a small difference of a manufacturing material cross-sectional shape, and affects the quality and yield of the manufacturing material. Depending on the manufacturing material size, it is often impossible to detect the accidental defect by nondestructive inspection after manufacturing such as X-ray CT. Generally, an arbitrary shape is often feely formed by the additive manufacturing technique. Hence, there is a need for a technique for detecting and repairing an accidental defect in process for an arbitrary cross-sectional shape. Since melting is performed from the surface, there is high possibility that defects are hidden not only in a place observed in surface monitoring data but also immediately under an unobserved place. Accidental defects embedded immediately under the surface cannot be eliminated by a method of detecting and repairing a defect exposed to the surface, like an object detection technique. A coagulation reaction progresses not only from the bottom of the molten pool but also from the molten pool surface. For this reason, data concerning the state of the molten pool obtained by measuring the region whose surface temperature is equal to or more than the melting point does not include information of the molten region immediately under the surface. Hence, by the method using surface molten pool monitoring like a following conventional technique, occurrence of a defect embedded immediately under the surface cannot be detected at high possibility. Hence, the challenge is to develop a technique of detecting and repairing even a defect embedded immediately under the manufacturing surface for a member having an arbitrary shape.

### [Third Example Embodiment]

An information processing apparatus according to the third example embodiment of the present invention will be described next. The information processing apparatus according to this example embodiment is different from the above-described second example embodiment in that a melting energy is appropriately adjusted at the time of defect repair by remelting. As for the adjustment of the melting energy, for example, a melting state such as a melting surface temperature is detected, and at least one selected from a group of an output adjustment, a scan speed, and a beam diameter is adjusted. The rest of the components and operations is the same as in the second example embodiment. Hence, the same reference numerals denote the same components and operations, and a detailed description thereof will be omitted.

### (Defect Repairer)

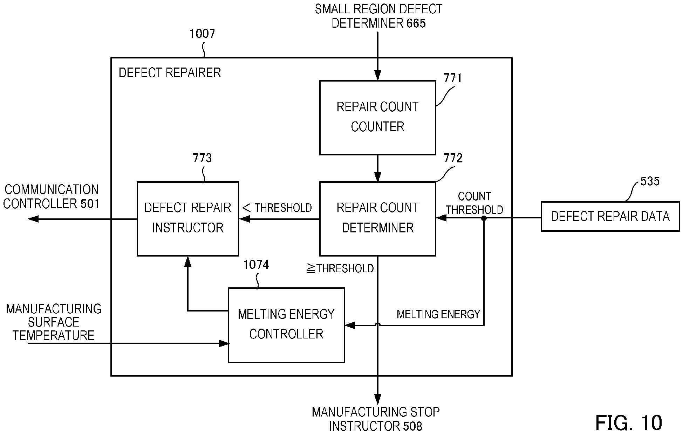

Fig. 10 is a block diagram showing the functional configuration of a defect repairer 1007 according to this example embodiment. Note that the same reference numerals as in Fig. 7A denote the same constituent elements in Fig. 10, and a repetitive description will be omitted.

The defect repairer 1007 includes a melting energy controller 1074. The melting energy controller 1074 controls a melting energy from defect repair data 535 in correspondence with the current state of a melting surface, for example, a detected manufacturing surface temperature. For example, if the manufacturing surface temperature is high, the melting energy is reduced. If the manufacturing surface temperature is low, the melting energy is increased. Note that the control factor and the control method of the melting energy are not limited to this example.

According to this example embodiment, it is possible to more efficiently repair a manufacturing defect in addition to the effects of other example embodiments.

### [Fourth Example Embodiment]

An information processing apparatus according to the fourth example embodiment of the present invention will be described next. The information processing apparatus according to this example embodiment is different from the above-described second and third example embodiments in that at least one selected from a group of the layer thickness and the melting energy of a next layer is controlled in accordance with the state of a manufacturing defect. The rest of the components and operations is the same as in the second example embodiment. Hence, the same reference numerals denote the same components and operations, and a detailed description thereof will be omitted.

### <Functional Configuration of Information Processing Apparatus>

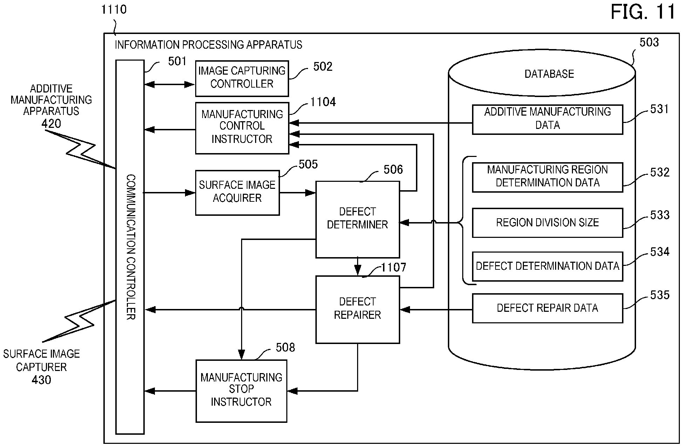

Fig. 11 is a block diagram showing the functional configuration of an information processing apparatus 1110 according to this example embodiment. Note that the same reference numerals as in Fig. 5 denote the same constituent elements in Fig. 11, and a repetitive description will be omitted.

The information processing apparatus 1110 includes a manufacturing control instructor 1104, and a defect repairer 1107. The manufacturing control instructor 1104 adjusts parameters at the time of subsequent layer formation, for example, a layer thickness or a melting energy based on information in defect repair from the defect repairer 1107. The defect repairer 1107 feeds back parameter settings to the manufacturing control instructor 1104 based on the information in defect repair, for example, a repair count or a defect ratio.

### (Defect Repairer)

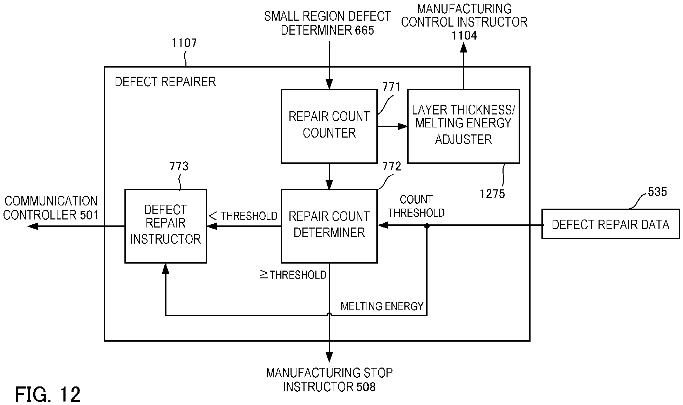

Fig. 12 is a block diagram showing a functional configuration of the defect repairer 1107 according to this example embodiment. The same reference numerals as in Fig. 7A denote the same constituent elements in Fig. 12, and a repetitive description will be omitted.

The defect repairer 1107 includes a film thickness/melting energy adjuster 1275. The film thickness/melting energy adjuster 1275 performs, for the manufacturing control instructor 1104, adjustment of at least one selected from a group of a film thickness and a melting energy corresponding to the count of a repair count counter 771. For example, if the repair count is large, it is judged that the layer thickness is too large, or the melting energy is too small, and the layer thickness is adjusted thin, or the melting energy is adjusted high. Note that whether to adjust the layer thickness or the melting energy is selected in consideration of the quality of the product, the manufacturing speed, or the powder material. Note that if the repair count is small, it can be judged that repair is performed without waste.

### (Another Example of Defect Repairer)

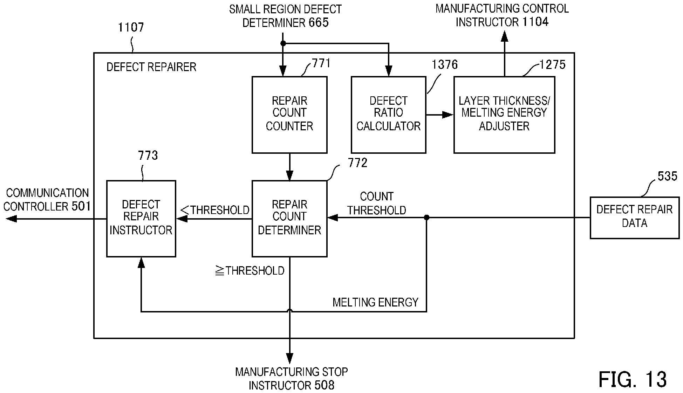

Fig. 13 is a block diagram showing another functional configuration of the defect repairer 1107 according to this example embodiment. The same reference numerals as in Figs. 7A and 12 denote the same constituent elements in Fig. 13, and a repetitive description will be omitted.

The defect repairer 1107 further includes a defect ratio calculator 1376. Based on a defect ratio calculated by the defect ratio calculator 1376, the film thickness/melting energy adjuster 1275 performs, for the manufacturing control instructor 1104, adjustment of at least one selected from a group of a film thickness and a melting energy. For example, a magnitude such as the ratio of defective small regions to all small regions is also a factor for judging whether the layer thickness or the melting energy is appropriate. If the ratio of defective small regions to all small regions is high, the film thickness or the melting energy is determined to be inappropriate and adjusted. On the other hand, if the ratio of defective small regions to all small regions is low, it is determined that the film thickness or the melting energy in initial melting or remelting is appropriate.

According to this example embodiment, it is possible to more efficiently suppress occurrence of a manufacturing defect in addition to the effects of other example embodiments.

### [Other Example Embodiments]

Note that in this example embodiment, remelting has been described as defect repair. If exposure of a preceding manufacturing layer is detected in the captured image before melting or the image after melting, the powder bed may be laid anew.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. An information processing apparatus for controlling additive manufacturing of a powder bed method, comprising:
an acquirer that acquires roughness data indicating a roughness of a manufacturing surface after melting; and
a defect determiner that divides the manufacturing surface into small regions each having a predetermined size, and compares the roughness data with a predetermined threshold for each small region, thereby determining whether a defect exists in the small region.

2. The information processing apparatus according to claim 1, wherein if an unmolten region is included in the small region, said defect determiner replaces data of the manufacturing surface in the unmolten region using data of the manufacturing surface in the small region, and determines whether a defect exists in the small region including the unmolten region.

3. The information processing apparatus according to claim 1 or 2, further comprising a defect repair instructor that instructs remelting of a region that is determined by said defect determiner to have a defect.

4. The information processing apparatus according to claim 3, wherein said defect repair instructor comprises a melting energy controller that controls a melting energy in remelting in accordance with a state of the manufacturing surface.

5. The information processing apparatus according to claim 3 or 4, wherein said defect repair instructor further comprises a stop instructor that instructs stop of additive manufacturing if a remelting count exceeds a count threshold.

6. The information processing apparatus according to any one of claims 1 to 5, further comprising a manufacturing control instructor that, if it is determined by said defect determiner that a defect exists, instructs to control at least one selected from a group of a layer thickness of powder of a layer to be manufactured next and the melting energy in accordance with the defect.

7. The information processing apparatus according to any one of claims 1 to 6, wherein the small region having the predetermined size is a region having a size 5 to 10 times a width of a molten pool.

8. The information processing apparatus according to any one of claims 1 to 7, wherein said acquirer acquires the roughness of the manufacturing surface based on surface image data obtained by capturing the manufacturing surface after the melting.

9. A three-dimensional additive manufacturing system of a powder bed method, comprising:
an information processing apparatus defined in any one of claims 1 to 8; and
an additive manufacturing apparatus that manufactures an additively manufactured object in accordance with control by the information processing apparatus.

10. An information processing method for controlling additive manufacturing of a powder bed method, comprising:
measuring a roughness of a manufacturing surface after melting; and
dividing a region of the manufacturing surface into small regions each having a predetermined size, and comparing the roughness with a predetermined threshold for each small region, thereby determining whether a defect exists in the small region.

11. An information processing program for controlling additive manufacturing of a powder bed method, which causes a computer to execute a method, comprising:
measuring a roughness of a manufacturing surface after melting; and
dividing a region of the manufacturing surface into small regions each having a predetermined size, and comparing the roughness with a predetermined threshold for each small region, thereby determining whether a defect exists in the small region.

12. A manufacturing defect detection method comprising:
acquiring a surface image obtained by capturing a manufacturing surface of each layer after melting in additive manufacturing of a powder bed method;
extracting a molten region from the surface image;
dividing the molten region into small regions each having a predetermined size; and
determining, based on a roughness of the surface image of the small region, whether a defect exists for each small region.
